(19) Europäisches Patentamt
European Patent Office
Office européen des brevets

(11) **EP 2 695 525 A1**

(12) **EUROPEAN PATENT APPLICATION**

(43) Date of publication:
**12.02.2014 Bulletin 2014/07**

(51) Int Cl.:
***A23L 1/10*** (2006.01)   ***A23L 1/187*** (2006.01)
***A23L 1/176*** (2006.01)

(21) Application number: **12179643.7**

(22) Date of filing: **08.08.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Unilever N.V.
3013 AL Rotterdam (NL)**

(72) Inventors:
• **Bansal, Vishi
Whitefield, Bangalore 560 066 (IN)**

• **Kalathil, Ramitha
Whitefield, Bangalore 560 066 (IN)**
• **Majumder, Suman
Whitefield, Bangalore 560 066 (IN)**
• **Gadgil, Vijay Ramchandra
Whitefield, Bangalore 560 066 (IN)**

(74) Representative: **Wurfbain, Gilles L.
Unilever N.V.
Unilever Patent Group
Olivier van Noortlaan 120
3133 AT Vlaardingen (NL)**

(54) **Cereal composition for reduced and delayed glucose release**

(57)   The present invention relates to a cereal composition, a food composition having the cereal composition. It is an object of the present invention to provide a cereal composition having a combination of wheat, barley and finger millet. It is another object of the present invention to provide a cereal composition having reduced and delayed postprandial blood glucose release benefits. It is another object of the present invention to provide a food composition having the cereal composition that provides reduced and delayed postprandial blood glucose release benefits. It is another object of the present invention to provide a cereal based food product obtained from the cereal composition or the food composition that provides postprandial blood glucose benefits. It is still another object of the present invention to provide a cereal based food product that gives postprandial blood glucose benefits without altering the sensorial characteristics of the prepared food product. The present inventors have found that a cereal composition comprising ground wheat, ground barley and ground finger millet with selective particle size provides reduced and delayed postprandial blood glucose release benefits. It was further found that a cereal based prepared food product obtained from the cereal composition provides reduced and delayed postprandial blood glucose release benefits while still retaining its sensorial characteristics.

**Description**

**TECHNICAL FIELD**

The present invention relates to a cereal composition and a food composition comprising the cereal composition.

It particularly relates to a cereal composition suitable to prepare Indian style porridge known as upma.

**BACKGROUND AND PRIOR ART**

Cereals are primary sources of carbohydrates. Rice, wheat and corn are cereals grains that form the staple food worldwide. Food products in ready to cook and ready to eat formats having cereals are widely consumed. Common cereal based processed food products includes pasta, noodles, baked products, upma and porridge.

Upma is a popular cereal based Indian breakfast food composition prepared from semolina wheat flour (a coarse wheat flour also called Rava or Suji in India). Preparation of upma typically includes slightly roasting the wheat semolina, optionally in the presence of edible fat or oil and cooking the roasted wheat semolina with twice the amount of water until all the water is absorbed. Additionally spices and vegetables may be added.

Carbohydrates present in the ingested cereal based food composition are digested in the body to release glucose that absorbs into the blood stream. Effect of carbohydrates in a food on *in vivo* blood glucose levels can be measured by determining the food's glycaemic response or glycaemic index (also glycemic index), abbreviated as GI (Jenkins et al., American Journal of Clinical Nutrition 1981 vol. 34: 362-366). Based on their glycemic index the carbohydrates can a high GI, a medium GI and a low GI carbohydrate.

High GI carbohydrates (70 and above) break down rapidly during digestion and cause a quick release of glucose into the blood stream and thus eliciting a large glycaemic response. Examples of high GI food include cornflakes, white bread.

Low GI carbohydrates (55 or less) are less digestible carbohydrates or they break down slowly resulting in a lower or gradual release of glucose into the blood stream. Examples of Low GI foods include brown rice, most fruits and vegetables and grainy breads.

Medium GI carbohydrates (56 to 69) include whole wheat products, table sugar and most species of white rice.

Cereal based processed food products pasta, noodles, baked products, upma and porridge are generally made of uniformly processed grains that typically include a flour. The flour may be further processed to form a desired shape and baked, toasted, cooked or otherwise pre-prepared. The uniformly processed grains have High GI and are rapidly digested and show high glycemic response.

Excessive consumption of high glycemic index (GI) food such as refined grains, uniformly processed grains or grain extracts is associated with health concerns including increase in blood glucose levels, insulin resistance, glucose tolerance and obesity.

The negative effects on health related to consumption of processed grains has created increased interest for food goods that reduces daily calorie intake and provides reduced and/or delayed release of glucose.

Several attempts at controlling blood glucose levels and preventing insulin resistance and glucose tolerance through food goods have been made.

One of the known approaches for controlling blood glucose levels is to prepare food goods having low levels of digestible carbohydrates. In these food goods high GI food ingredients are replaced with low GI food ingredients. Typically the low GI food ingredients include proteins, dietary fibres, fats, and resistant starches that are not glycemic (do not produce a blood glucose response). A limitation of this approach is that low GI food ingredients are significantly expensive are and also impart poor organoleptic quality to the food goods.

Another known approach to reduce the digestible carbohydrate content of the food goods is to incorporate whole cereal grains. Whole cereals grains unlike the processed grains include the bran and the germ portions of the cereal that are rich in fibres and other nutritive ingredients. Consumption of atleast three servings of whole grains is recommended per day and is reported to improve glucose metabolism, reduce blood glucose levels and prevents insulin resistance and glucose tolerance. The average consumption of whole cereal grains is however reported to be much below these recommended levels.

Prior art documents have disclosed food compositions having cereal grains that provide health benefits.

RU20090115489 (Kushchenko, 2010) discloses a food product having salt, sugar and a food cereal that provides for a balanced and cost-efficient food product. The food cereal includes roasted grains of wheat, rye, barley, oat, buckwheat, millet and vetch. The application further discloses grinding roasted cereals to a particle size of 0.3 to 1.1 mm. This application discloses a food product having sugar and does not teach of a cereal composition for reducing glucose levels in blood.

CN101467619 A (2009, Xianling Li) discloses a cereal porridge having a plurality of coarse ground minor cereal grains that provides hypoglycaemic efficacy. The mixed grains is selected from oats, buckwheat, barley, Italy MI Ren, red bean, lentils, peas and other grains in a proportion of 30% : 25% : 15% : 10% : 10% : 5% : 5%. This application discloses a composition having minor cereal grains that does not include wheat.

Although whole cereal grains provide benefits of slow release of glucose in the blood when consumed, present inventors have found that the prepared cereal based food goods having whole cereal grains score low on consumer preference and are lacking in the desired sensorial characteristics and attributes associated with the prepared food goods. It is thus a challenge to provide a cereal based food composition that provides reduced and delayed release of glucose into the blood while still keeping the desired consumer attributes unaffected.

It is thus an object of the present invention to provide a cereal composition having a combination of ground wheat, ground barley and ground finger millet.

It is another object of the present invention to provide a cereal composition having reduced and delayed postprandial blood glucose release benefits.

It is another object of the present invention to provide a food composition having the cereal composition that provides reduced and delayed postprandial blood glucose release benefits.

It is yet another object of the present invention to provide a cereal based prepared food goods obtained from the cereal composition or the food composition that provides reduced and delayed postprandial blood glucose benefits.

It is still another object of the present invention to provide a cereal based food composition that gives reduced and delayed postprandial blood glucose benefits without altering the sensorial characteristics of the prepared food composition.

Surprisingly it is found that a cereal composition comprising ground wheat, ground barley and ground finger millet with selective particle size provides reduced and delayed postprandial blood glucose release benefits. It was further found that a prepared food goods obtained from the cereal composition provides reduced and delayed postprandial blood glucose release benefits while still retaining its sensorial characteristics.

## SUMMARY OF THE INVENTION

According to a first aspect of the invention there is provided a cereal composition comprising on dry weight basis:

    a. 40 to 85% ground barley;
    b. 3 to 45% ground wheat; and,
    c. 5 to 15% ground finger millet;

wherein atleast 80% of the ground barley and atleast 80% of the ground wheat has a particle size from 500 microns to 1500 microns.

According to a second aspect there is provided a method for preparing a cereal composition according to the first aspect including the steps of:

    a. sieving ground barley and ground wheat to obtain ground barley and ground wheat with particle size of 500 to 1500 microns; and,
    b. mixing 40 to 85% on dry weight basis of the ground barley, 3 to 45% on dry weight basis of the ground wheat and 5 to 15% on dry weight basis of the ground finger millet.

According to a third aspect of the invention there is provided a food composition comprising the cereal composition of the first aspect.

According to a fourth aspect there is provided a use of a cereal composition of the first aspect or a food composition of the third aspect for reduced and delayed postprandial blood glucose benefits.

For the avoidance of doubt, the term "ground barley" means ground barley grain derived from barley plant, *Hordeum vulgare,* L. including any varieties.

The term "ground wheat" means ground wheat grain derived from wheat plant, *Triticum* species and including any varieties.

The term "ground finger millet" means finger millet seeds derived from finger millet plant, *Eleusine coracana,* L. including any varieties.

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/ weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

## DETAILED DESCRIPTION OF THE INVENTION

According to the first aspect, the present invention provides a cereal composition having ground barley, ground wheat and ground finger millet.

Ground Barley:

Disclosed cereal composition includes 40 to 85 % on dry weight basis of ground barley. Preferred compositions include at least 45 %, more preferably at least 50%, still more preferably at least 55%, or even at least 60%, or even atleast 70% but preferably not more than 83%, more preferably not more than 80%, still more preferably not more than 78%, even more preferably not more than 75%, on dry weight basis of the ground barley.
Without wishing to be bound by theory it is believed that cereal composition having more than 85% of barley on dry weight basis upon heating makes the prepared cereal based food goods sticky and undesirable.
Barley may preferably be selected from hulled barley or pearl barley or mixtures thereof. Hulled barley refers to barley where the outer fibrous hull is removed but retains its bran and germ. Pearl barley refers to barley where the hull and bran are removed. Pearl barley may be polished or un-polished. It is highly preferred that the barley is hulled barley.
The barley is ground and atleast 80% of the ground barley has a particle size of 500 to 1500 microns. Preferably at least 85%, more preferably at least 90%, and still more preferably at least 95% of the ground barley has a particle size from 500 to 1500 microns. It is highly preferred that 100% of the ground barley has a particle size of 500 to 1500 microns.

Wheat:

Disclosed cereal composition includes 3 to 45% on dry weight basis of ground wheat. Preferred compositions include at least 3.5 %, more preferably at least 4 %, still more preferably at least 4.5 %, or even at least 5 %, but preferably not more than 40 %, more preferably not more than 25 %, still more preferably not more than 20 %, even more preferably not more than 15%, by weight of the ground wheat.
Wheat may be selected from any of the commercially available Triticum species. Preferably the wheat is selected from T. *aestivum, T. durum* and T. *compactum.* Ground wheat may be preferably selected from ground whole wheat grain, cracked wheat grain, semolina wheat flour or a mixture thereof. Whole wheat grain refers to wheat grain having its bran and the germ. Semolina Wheat flour refers to wheat endosperm separated from the bran and germ.
The wheat is ground and atleast 80% of the ground wheat has a particle size of 500 to 1500 microns. Preferably at least 85%, more preferably at least 90%, and still more preferably at least 95% of the ground wheat has a particle size from 500 to 1500 microns.
It is highly preferred that 100% of the ground wheat has a particle size of 500 to 1500 microns.

Finger Millet:

Disclosed cereal composition includes 5 to 15% on dry weight basis of ground finger millet. Preferred cereal compositions includes at least 6 %, more preferably at least 7%, still more preferably at least 8%, or even at least 10%, but preferably not more than 14%, more preferably not more than 13%, still more preferably not more than 12%, even more preferably not more than 11 %, by weight on dry weight basis of the ground finger millet. The finger millet may be selected from any of the commercially available varieties.
Without wishing to be bound by theory it is believed that when the cereal composition has more than 15% of finger millet on dry weight basis it gives the prepared food product having the cereal composition a chalk like mouthfeel that is not desirable.
Preferably the finger millet in the cereal composition is ground to fine flour. It is highly preferred that the ground finger millet has a particle not more than 150 microns. Preferably the ground finger millet has a particle size of 50 to 150 microns.

Digestible carbohydrate:

As used herein the term "digestible carbohydrate" means a portion of the total carbohydrates present in the cereal composition that are digested in the small intestine and converted into simple sugars example; glucose, and absorbed into the blood stream. Preferably 25% to 55% of the total carbohydrate in the cereal composition is a digestible carbohydrate.

Optional ingredients:

The cereal composition of the present invention may include a flowing agent, an antioxidant, a food grade preservative, a colorant, a flavouring agent, a seasoning or mixtures thereof.

Method for preparing the cereal composition:

According to a second aspect disclosed is a method of preparing a cereal composition according to the first aspect including the steps of sieving the barley and the wheat separately to obtain the ground barley and the ground wheat with atleast 80% by weight of the ground barley and atleast 80% by weight of the ground wheat having a particle size of 500 to 1500 microns;
and, uniformly mixing 40 to 85% on dry weight basis of the ground barley, 3 to 45% on dry weight basis of the ground wheat and 5 to 15% on dry weight basis of the ground finger millet to provide a cereal composition.
Mixing is preferably in a mixer or a blender for a time period of 10 to 15 minutes.
Preferably the ratio of ground barley: ground wheat is from 1:1 to 20:1, ratio of ground barley: ground finger millet is from 3:1 to 10:1 and ratio of ground wheat : ground finger millet is from 0.2 :1 to 3:1.
Preferably the ground barley, the ground wheat and the ground finger millet are roasted lightly. Preferably the individual cereals are roasted in a roaster or a skillet at a roasting temperature of 80 to 90 °C for 6 to 10 minutes before the step of mixing. Roasting may be either dry roasting or roasting in presence of a fat. The fat is preferably selected from solid fat or liquid fats like vegetable oil.
Without wishing to be bound by theory it is believed that roasting improves the flavour development. Roasting removes or destroys anti-nutritional factors present in the raw cereal. Preferably the cereals are dry roasted to avoid the risk of rancidity associated with roasting in oil.

Food composition:

According to a third aspect there is provided a food composition that includes the cereal composition of the present invention.
The food composition according to the present invention may be a ready to cook upma composition. The ready to cook upma composition includes cereal composition according to the present invention and preferably includes freeze dried vegetables, fat and seasoning. Preferably the ready to cook upma composition includes 5 to 15 % on dry weight basis dried vegetables, 2 to 5 % fat and 10 to 15 % on dry weight basis of seasonings.
Preferably the vegetables are selected from peas, carrots, beans, capsicum, potatoes. The vegetables are preferably dried by any of the known method of drying. Preferably the vegetables are freeze dried.
The food composition of the present invention may be used to prepare cereal based prepared food compositions including porridges, gruels, breads, extruded food products comprising pastas such as macaroni and spaghetti, noodles and baked products such as cakes, cookies, biscuits and other, snacks. Preferably the extruded food composition is instant cooking or a quick boiling form. A preferred food composition having the cereal composition of the present invention is the Indian style porridge known as upma.
The cereal based processed food goods such as those described herein are prepared according to the routine methods known to a person skilled in the art using the cereal composition or the food composition of the present invention as the principal component and using the general equipments used for processing such finished goods. Further raw materials are with no specific limitation, and therefore, egg, egg white, seasoning, edible salt, spices and the like are appropriately used, if necessary.
Preferably the method for preparing upma from the ready to cook upma composition includes the steps of adding the upma composition according to the present invention in a cooking vessel; mixing a known amount of water to the cooking vessel to form a solution; cooking the solution for 7-10 minutes.

**EXAMPLES:**

Preparing the cereal composition:

1 kg each of wheat, barley and finger millet were obtained from the local market in Bangalore, India. The cereals were individually ground in a grinder to provide coarsely ground wheat and ground barley. The finger millet was ground to form finger millet flour. The ground wheat and the ground barley were sieved individually in a sieve shaker for a time period of 10 minutes at a speed of 200-250 rotations per minute. The sieve shaker was arranged with a stack of two sieves of two different mesh sizes; the ground wheat was sieved through a first sieve with a mesh size of 1500 microns and the particles passing through the first sieve were sieved through a second sieve with a mesh size of 500 microns. After the sieving was completed, the fraction of the ground wheat that passed through the first sieve of mesh size of 1500 microns and retained on the second sieve of mesh size of 500 microns was collected to obtain the ground wheat according to the present invention. Similarly the ground barley according to the present invention was also obtained.

A cereal composition according to the present invention was prepared by mixing together 40 to 85% by dry weight basis of the ground barley having particle size from 500 to 1500 microns, 3 to 45% by dry weight basis of the ground wheat having particle size from 500 to 1500 microns and 5 to 15% ground finger millet flour in a blender to provide the cereal composition.

Optionally the ground wheat, the ground barley and the ground finger millet was roasted at 80 to 90°C for 6 to 10 minutes before mixing them together.

Preparation of the ready to cook upma composition (food composition) according to the present invention:

For preparing the ready to cook upma composition, around 2 to 5% of fat or edible vegetable oil was taken in a pan and heated on fire. Next, 10 to 15 % on dry weight basis of seasonings that preferably included mustard seeds, red chillies, black gram (*Vigna mungo*) and curry leaves *(Murraya koenigii)* were added into the heated fat or edible vegetable oil and tossed until the seasonings cracked. When the seasoning stopped cracking the pan was removed from fire. To the prepared seasoning, cereal composition according to the present invention 5 to 15 % on dry weight basis freeze dried vegetables and spices were added and all the ingredients are mixed in a blender for 30 minutes to provide the ready to cook upma composition.

For making the prepared food good ready for consumption the upma composition was mixed with hot or boiling water in a ratio of 1:2 and cooked until all the water is absorbed.

Evaluation of the % digestion and glucose release through in-vitro studies and consumer acceptability of the cereal composition:

For the analysis procedure the required reagents were prepared as described below:

a. Acetate buffer (pH 6): 0.2M potassium acetate, 0.15M NaCl, 5mM KCl and 5mM $CaCl_2$ were mixed to obtain the acetate buffer.

b. Saliva: 33.3mg $\alpha$-amylase (Sigma 10080. 44 U/mg) was added in 5ml DM-water.

c. Gastric juice: 127.2mg pepsin (Sigma 77160. 630 U/mg), 125.1 mg guar gum and 12.5ml 0.1 M HCl were mixed with 12.5ml DM-water.

d. Digestive Enzyme mix: 525.3mg Pancreatin (Sigma P1625. 3xUSP) was added in 40ml acetate buffer and stirred for 15 minutes on a 37°C water bath to form a pancreatin solution. The solution was transferred to a centrifuge tube and centrifuged at 2000g for 10 minutes. 28ml of the supernatant of the Pancreatin solution was mixed with 2.0ml Amyloglucosidase (Sigma A7095. AMG300L. >300 units/ml) solution.

e. Glucose Oxidase/Peroxidase Reagent: A capsule (Product Code G 3660) with 500 units of glucose oxidase (Aspergillus niger), 100 purpurogallin units of peroxidase (horseradish) and buffer salts were dissolved with 39.2 ml of deionized in an amber bottle.

f. o-Dianisidine Reagent: Pre weighed o-dianisidine vial (Product Code D 2679) having 5 mg of o-dianisidine dihydrochloride was reconstituted with 1.0 ml of deionized water in a vial. The vial was inverted several times to dissolve the contents. Exposure of the reagent to light was avoided.

g. GOPOD Assay Reagent: 39.2 ml of Glucose Oxidase/Peroxidase Reagent and 0.8 ml of the o-Dianisidine Reagent was added into an amber bottle and the bottle was inverted several times to mix the contents . Exposure of the GOPOD Assay reagent to light was avoided.

Analysis procedure for determination of % digestion:

Hydrolysis kinetics for the cereal compositions tested were obtained in accordance with the procedure established by Englyst et al (Englyst HN, Kingman SM, Cummings JH. 1992. Classification and measurement of nutritionally important starch fractions. Eur J Clin Nutr 46:S33-S50.), that has relatively high resemblance to in vivo data. 500 mg of cereal composition was weighted into a 50mL tube and 1 mL of salivary α-Amylase was added to the tube. The tube was vortexed for 30 seconds and 5ml of Gastric juice was added along with three glass balls of 10mm.

The tube was then incubated for 30 minutes at 37°C and after incubation period the solution was neutralised with the addition of 1 mL 0.25M NaOH. To the neutralised solution 25ml of 0.2M acetate buffer was added to bring the pH 6. To mimic the starch digestion in small intestine, 5ml of digestive enzyme mix was added and incubated at 37°C in a shaking water bath. 200 microlitre aliquots of the digested solution was sampled out at time intervals of 10, 20, 30, 60, 120 and 180 minutes. To the aliquots 4.8mL of 80% ethanol was immediately added to denature the enzyme. The aliquots were centrifuged and 0.4mL of the supernatant was added to 3.6mL DM-water to obtain a supernatant solution.

The D-glucose content of the supernatant solution was analysed by reacting 1 ml of the supernatant solution with 2ml of GOPOD Assay reagent at 37°C for 30 minutes. The reaction was quenched by adding 2ml of 12N $H_2SO_4$. The absorbance of the solution was measured at 540nm against the blank.

The amount of glucose in the sample (cereal composition) was determined as:

$$glu\cos e = \frac{0.9 \times D \times V_t \times \left(A_{540} - A^0\right)}{\varepsilon \times W} \times 100\%$$

in which:

D = dilution of sample (cereal composition)
$V_t$ = total volume of *in vitro* medium
$A_{540}$ = absorbance of test solution at 540nm
$A^0$ = absorbance of blank solution (intercept of glucose calibration)
$\varepsilon$ = extinction coefficient of glucose at 540nm
W = weight of sample (cereal compostion)

Procedure for determining Consumer acceptability:

The consumer acceptability of the food goods (Upma) prepared with the cereal composition and method of preparation as disclosed in the invention was evaluated with a panel of 35 volunteers.

The upma was evaluated on various parameters like aroma, texture, taste, after taste, mouth feel, appearance and overall acceptability on a 7 point Heidonic scale where 1 represents extreme dislike whereas 7 represents extreme liking.

The percentage of volunteers giving a particular score for overall acceptability was calculated to arrive at consumer acceptability of the product.

Evaluation of compositions according to the present invention and comparative Compositions with Ground whole wheat:

The compositions of the examples 1 and 2 having the % of ground whole wheat, finger millet and barley according to the present invention and comparative composition A having % of wheat, finger millet and barley outside the range of the present invention are provided in Table 1 below. The particle size of ground wheat and ground barley used in Examples 1, 2 and A was 500 to 1000 microns. The particle size of ground finger millet in Example 1 and A was 500 to 1000 microns and in Example 2 the finger millet was in the form of finger millet flour with a particle size of less than 150 microns. The % glucose released for 100g of starch at the end of 180 minutes of digestion process conducted as described above was measured and the consumer acceptability of the prepared upma from the cereal composition was determined and provided in Table 1 below.

Table 1

| Composition | % B, %, F, % W; | Consumer Acceptability | % digestion/100gm starch |
|---|---|---|---|
| Ex 1 | 80, 15, 5 | 35.71 | 55.88439 |
| Comp A | 45, 5, 50 | 35.71 | 63.15823 |
| Ex 2 | 80, 15, 5 | 43.75 | 48.50573 |
| B - ground barley; F - ground finger millet; W - ground whole wheat | | | |

From the results, it is clear that the cereal composition according to the present invention (Ex 1, Ex 2) provides reduced amounts of released glucose at the end of 180 minutes as compared to the comparative composition (Comp A) without compromising on the sensorial characteristics.

Evaluation of compositions according to the present invention and comparative Compositions with semolina wheat flour:

The compositions with semolina wheat flour according to the present invention (Ex 3) and comparative compositions (Comp B) are provided in Table 2 below. The particle size of semolina wheat flour and ground barley used in Ex 3 and Comp B was 500 to 1000 microns. The particle size of ground finger millet used in Ex 3 and Comp B in the form of finger millet flour was less than 150 microns. The % glucose released for 100g of starch at the end of 180 minutes of digestion process (conducted as described above) was measured and the consumer acceptability of the prepared upma from the cereal compositions were determined and was provided in Table 2 below.

Table 2

| Ex | % B, %, F, % WS; | Consumer Acceptability | % digestion/100gm starch |
|---|---|---|---|
| 3 | 80, 15,5 | 31.25 | 39.95235 |
| B | 45, 5, 50 | 43.75 | 60.40643 |
| B - ground barley; F - ground finger millet; WS - semolina wheat flour | | | |

From the results, it is clear that the cereal composition prepared using semolina wheat flour, ground barley and ground finger millet according to the present invention (Ex 3) provides lower release of glucose as compared to the comparative composition (Comp B) without compromising on the sensorial characteristics.

Effect of particle size on the digestibility and consumer acceptability of composition according to the present invention and of comparative cereal compositions.

Table 3

| Ex | % B, %, F, % WS | Particle size of cereal composition (in microns) | Consumer Acceptability | % digestion/100gm starch |
|---|---|---|---|---|
| 4 | 80, 15,5 | B ,WS from 500 to 1500 and F < 150 | 31.25 | 39.95235 |
| C | 80, 15,5 | B, F, WS < 150 | 13.1 | 63.7914 |
| D | 80, 15,5 | 1500 <B, F , WS < 2000 | 14.29 | 31.75653 |
| B - ground barley; F - ground finger millet; WS - semolina wheat flour | | | | |

From the results, it is clear that the cereal composition having particle size according to the present invention (Ex 4) provides lower release of glucose without compromising on the sensorial characteristics as compared to Comparative compositions (C, D).

It should be understood that the specific forms of the invention herein illustrated and described are intended to be representative only as certain changes may be made therein without departing from the clear teachings of the disclosure.

Although the invention has been described with reference to specific embodiments, it will be appreciated by those skilled in the art that the invention may be embodied in many other forms.

**Claims**

1. A cereal composition comprising on dry weight basis:

   a. 40 to 85% ground barley;
   b. 3 to 45% ground wheat; and,
   c. 5 to 15% ground finger millet;
   wherein atleast 80% of the ground barley and atleast 80% of the ground wheat has a particle size from 500 microns to 1500 microns.

2. A cereal composition as claimed in claim 1 wherein the ground finger millet has a particle size of 50 to 150 microns.

3. A cereal composition as claimed in claim 1 wherein the ground barley, the ground wheat and the ground finger millet are roasted.

4. A cereal composition as claimed in any one of the preceding claims wherein 25% to 55% of the total carbohydrate is a digestible carbohydrate.

5. A cereal composition as claimed in claim 1 wherein the ratio of ground barley: ground wheat is from 1:1 to 20:1, ratio of ground barley : ground finger millet is from 3:1 to 10:1 and ratio of ground wheat : ground finger millet is from 0.2 :1 to 3:1.

6. A cereal composition as claimed in any one of the preceding claims wherein the wheat is selected from whole wheat grain, cracked wheat grain, semolina wheat flour or a mixture thereof.

7. A cereal composition as claimed in any one of the preceding claims wherein the barley is selected from hulled barley, pearl barley or mixtures thereof.

8. A method for preparing a cereal composition as claimed in any one of the preceding claims comprising the steps of:

   a. sieving ground barley and ground wheat to obtain ground barley and ground wheat with particle size of 500 to 1500 microns; and,
   b. mixing 40 to 85% on dry weight basis of the ground barley, 3 to 45% on dry weight basis of the ground wheat and 5 to 15% on dry weight basis of the ground finger millet.

9. A method as claimed in claim 8 wherein the ground barley, the ground wheat and the ground finger millet are individually roasted to taste after step a.

10. A food composition comprising a cereal composition according to any one of the preceding claims 1 to 7.

11. A food composition according to claim 10 wherein the food composition is a porridge, upma or a baked goods.

12. Use of a cereal composition as claimed in claim 1 or a food composition as claimed in claim 10 or 11 for reduced and delayed postprandial blood glucose release benefits.

Europäisches
Patentamt
European
Patent Office
Office européen
des brevets

## EUROPEAN SEARCH REPORT

**Application Number**

EP 12 17 9643

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2004/191377 A1 (MALLESHI NAGAPPA GURUSIDDAPPA [IN] ET AL) 30 September 2004 (2004-09-30) * paragraphs [0001], [0004], [0015] - [0023], [0054] - [0056], [0065], [0069] - [0071]; claims; examples * ----- | 1-12 | INV. A23L1/10 A23L1/187 A23L1/176 |
| Y | US 6 287 626 B1 (FOX JOSEPH R [US]) 11 September 2001 (2001-09-11) * the whole document * ----- | 1-12 | |
| A | US 4 640 842 A (MAY WILLIAM A [US]) 3 February 1987 (1987-02-03) * the whole document * ----- | 1-12 | |
| A | US 2010/316765 A1 (FRENCH JUSTIN A [US] ET AL) 16 December 2010 (2010-12-16) * the whole document * ----- | 1-12 | |
| | | | TECHNICAL FIELDS SEARCHED (IPC) A23L |

The present search report has been drawn up for all claims

| Place of search | Date of completion of the search | Examiner |
|---|---|---|
| The Hague | 28 January 2013 | Bondar, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 17 9643

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2013

| Patent document cited in search report | | Publication date | Patent family member(s) | | Publication date |
|---|---|---|---|---|---|
| US 2004191377 | A1 | 30-09-2004 | US 2004191377 A1 | | 30-09-2004 |
| | | | US 2006263456 A1 | | 23-11-2006 |
| US 6287626 | B1 | 11-09-2001 | NONE | | |
| US 4640842 | A | 03-02-1987 | NONE | | |
| US 2010316765 | A1 | 16-12-2010 | AR | 077085 A1 | 03-08-2011 |
| | | | AU | 2010260219 A1 | 01-12-2011 |
| | | | CA | 2761566 A1 | 23-12-2010 |
| | | | CN | 102438458 A | 02-05-2012 |
| | | | CO | 6460751 A2 | 15-06-2012 |
| | | | EP | 2442661 A1 | 25-04-2012 |
| | | | TW | 201103441 A | 01-02-2011 |
| | | | US | 2010316765 A1 | 16-12-2010 |
| | | | WO | 2010147892 A1 | 23-12-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 20090115489, Kushchenko

- CN 101467619 A, Xianling Li)

**Non-patent literature cited in the description**

- **JENKINS et al.** *American Journal of Clinical Nutrition,* 1981, vol. 34, 362-366